# DEMANDE DE BREVET EUROPEEN

(11) **EP 4 667 501 A1**
(43) Date de publication de la demande: **24.12.2025**
(21) Numéro de dépôt: 25183327.3
(22) Date de dépôt: 17.06.2025
(51) Int. Cl.: C08F 120/38, H01M 10/052, H01M 10/0565

(54) **ÉLECTROLYTES POLYMÉRIQUES EUTECTIQUES PROFONDS À CONDUCTIVITÉ IONIQUE UNIPOLAIRE**

(30) Priorité: 18.06.2024 FR 2406505
(71) Demandeur: Commissariat à l'Energie Atomique et aux Energies Alternatives, 75015 Paris (FR)
(72) Inventeur: LANDA, Matthieu, 38054 Grenoble cedex 09 (FR); CLAEYS, Matteo, 38054 Grenoble cedex 09 (FR)
(74) Mandataire: Ipsilon

(57) **Abrégé**

Électrolyte polymérique eutectique à conductivité ionique unipolaire, dit encore SI PDEE, comprenant :
- au moins un polymère dont la chaîne principale est formée à partir de monomères, M, en C₂ à C₂₀ éthyléniquement polymérisables avec au moins une, et de préférence plusieurs, unités monomériques de ladite chaîne principale étant porteuse(s) d'au moins un groupement anionique dit SI⁻,
- au moins une espèce donneuse de liaison hydrogène, dite HBD, dans un rapport molaire SI⁻:HBD variant de 1:0,5 à 1:15, en particulier de 1:1 à 1:15 ; et
- au moins un cation, X⁺, de métal alcalin.

## Description

### Domaine technique

La présente invention se rapporte à de nouveaux électrolytes polymériques eutectiques profonds dits encore eutectogels pouvant être mis en œuvre comme électrolytes solides polymériques.

De tels électrolytes peuvent être utilisés dans différents systèmes ou dispositifs électrochimiques, notamment dans des batteries au lithium, des batteries au sodium ou des batteries au potassium.

### Technique antérieure

D'une manière classique, le principe de fonctionnement d'un générateur électrochimique repose sur l'insertion et le retrait, aussi appelé « désinsertion », d'un ion de métal alcalin ou d'un proton, dans et depuis l'électrode positive, et le dépôt ou l'extraction de cet ion, sur et de l'électrode négative.

Les principaux systèmes utilisent les cations Li⁺, Na⁺ et/ou K⁺ comme espèce ionique de transport. Dans le cas d'un accumulateur au lithium par exemple, le cation Li⁺ extrait de la cathode lors de la décharge de la batterie vient se déposer sur l'anode, et inversement, il s'extrait de l'anode pour s'intercaler dans la cathode lors de la charge.

Le transport du proton ou du cation alcalin, en particulier du cation lithium, sodium ou potassium, entre la cathode et l'anode, est assuré par un électrolyte conducteur ionique.

La formulation de l'électrolyte utilisé revêt un caractère essentiel pour les performances du système électrochimique, en particulier lorsque celui-ci est utilisé à des températures très basses ou très élevées. La conductivité ionique de l'électrolyte conditionne notamment l'efficacité du système électrochimique étant donné qu'elle intervient sur la mobilité des ions entre les électrodes positive et négative.

D'autres paramètres interviennent également dans le choix de l'électrolyte mis en œuvre. Il s'agit notamment de sa stabilité thermique, chimique ou électrochimique au sein du système électrochimique, ainsi que des critères économiques, de sécurité et de respect de l'environnement, incluant notamment la toxicité de l'électrolyte.

D'une manière générale, les électrolytes des systèmes électrochimiques se présentent sous forme liquide, gélifiée ou solide.

Les batteries au lithium, les batteries au sodium et les batteries au potassium mettant en œuvre des électrolytes à l'état solide (dits encore « SSE » pour l'acronyme anglo-saxon *« Solid-State Electrolyte* ») permettent d'atteindre des densités d'énergie plus élevées et une sécurité accrue du fait de l'absence de solvant. En particulier, les électrolytes solides polymériques (dits encore « SPEs » pour « *Solid Polymer Electrolytes* ») permettent la mise en œuvre de batteries d'épaisseur réduite et présentant une plus grande flexibilité.

De manière conventionnelle, les électrolytes solides polymériques les plus répandus sont composés d'une matrice polymère dans laquelle est dissous un sel de métal alcalin, comme un sel de lithium, de sodium ou de potassium. La plupart des matrices polymères sont des matrices polyéthers, et plus particulièrement poly(oxyde d'éthylène) (POE) et leurs dérivés, appréciées en raison de leur faible température de transition vitreuse (Tg), de l'ordre de - 60°C, comparativement à d'autres polymères, et de leur aptitude à complexer les cations Li⁺, Na⁺ et/ou K⁺. Toutefois, ces électrolytes présentent des performances limitées en matière de nombre de transport des ions (t₊) et de conductivité ionique liées au mécanisme de complexation des ions. Ainsi, pour un électrolyte solide polymérique à base de POE, par exemple, le nombre de transport ionique t₊ est généralement faible, de l'ordre de 0,1 à 0,3. Par ailleurs, le POE est largement cristallin (la cristallinité du POE pur est de l'ordre de 75-80 % à température ambiante), ce qui conduit à une perte de conductivité ionique de l'électrolyte solide à base de POE en dessous de sa température de fusion (environ 60-65°C). Il est connu que la conductivité ionique à température ambiante des électrolytes polymères peut être améliorée par l'ajout d'une phase liquide conductrice, conventionnellement des solvants à base de carbonates ou d'éthers : on parle alors d'électrolytes gélifiés. Cette phase liquide conductrice présente un double intérêt : elle participe elle-même à la conduction des cations Li⁺, Na⁺ et/ou K⁺ et permet de plastifier la matrice polymère, et ainsi d'améliorer sa conductivité ionique. Porcarelli et *al* [1] décrit notamment la synthèse d'électrolytes polymères gélifiés à conductivité unipolaire, dont la matrice est composée de dérivés de POE et le gélifiant est le propylène carbonate. Bien que la conductivité ionique des électrolytes gélifiés soit supérieure à celle des électrolytes polymères solides, elle demeure faible à température ambiante car en deçà de 0,7 mS/cm.

Il a été considéré que le nombre de transport des cations Li⁺, Na⁺ et/ou K⁺ peut être amélioré par la mise en œuvre d'un électrolyte dans lequel seul le cation Li⁺, Na⁺ et/ou K⁺ est mobile tandis que le contre-anion, greffé sur la matrice polymère, est immobile. Toutefois, comme les électrolytes polymères classiques, les électrolytes polymères à conductivité unipolaire souffrent d'une conductivité ionique faible à température ambiante.

De fait, des eutectogels, à savoir des électrolytes gélifiés dont la phase liquide conductrice est composée d'un *« Deep Eutectic Electrolyte »* ou dit encore DEE, aussi appelé *« Deep Eutectic Solvent »* ou dit encore DES ont été proposés. Kelchterman et *al* [2,3] décrit la synthèse d'eutectogels obtenus par polymérisation de composition comprenant un DES formé de LiTFSI, du monomère NMAC (N-méthylacétamide) et différents monomères. Pour sa part, Zhang et *al* [4] décrit la polymérisation d'un DES composé d'un sel de lithium et du monomère NIPAM (N-isopropylacrylamide) en présence d'un agent réticulant et d'éthylène carbonate. Toutefois, ces électrolytes contiennent une quantité élevée de phase liquide conductrice (DES) et le nombre de transport de ces électrolytes n'est pas égal à 1.

En conséquence et à la connaissance des inventeurs, il n'existe pas ce jour d'électrolyte eutectogel permettant d'obtenir une conductivité ionique unipolaire satisfaisante à température ambiante, tout en résolvant les problèmes liés à la sécurité des systèmes électrochimiques.

La présente invention a précisément pour objectif de répondre à ces attentes.

### Exposé de l'invention

L'invention a ainsi pour objet un électrolyte polymérique eutectique à conductivité ionique unipolaire, dit encore eutectogel single-ion ou SI PDEE, comprenant :
- au moins un polymère dont la chaîne principale est formée à partir de monomères, M, en C₂ à C₂₀ éthyléniquement polymérisables avec au moins une, et de préférence plusieurs, unités monomériques de ladite chaîne principale étant porteuse(s) d'au moins un groupement anionique dit SI⁻,
- au moins une espèce donneuse de liaison hydrogène, dite HBD, dans un rapport molaire SI⁻:HBD variant de 1:0,5 à 1:15, en particulier de 1:1 à 1:15 ; et
- au moins un cation, X⁺, de métal alcalin.

Ainsi, les inventeurs ont constaté qu'il est possible d'accéder à un électrolyte polymérique eutectique à conductivité ionique unipolaire menant à un nombre de transport satisfaisant sous réserve d'un choix spécifique de ses composés précurseurs.

En effet, et comme il ressort des exemples ci-après, les électrolytes polymériques eutectiques à conductivité ionique unipolaire selon l'invention, encore appelés électrolytes eutectogels single-ion selon l'invention, possèdent avantageusement, à une température de 30°C, une conductivité ionique supérieure à 6,4·10⁻⁵ S.cm⁻¹ ainsi qu'un nombre de transport égal à 1 du fait de la conductivité ionique unipolaire.

Selon un autre de ses aspects, l'invention a pour objet un procédé de préparation d'un électrolyte polymère eutectique à conductivité ionique unipolaire conforme à l'invention, comprenant au moins l'étape consistant à polymériser un électrolyte eutectique, dit SI DEE, qui comprend au moins une entité monomérique éthyléniquement polymérisable, et porteuse d'au moins un groupement anionique SI⁻ avec un contre-ion alcalin et au moins une espèce donneuse de liaison hydrogène HBD, dans un rapport molaire SI⁻:HBD variant de 1:0,5 à 1:15, en particulier de 1:1 à 1:15.

L'invention a également pour objet un électrolyte eutectique à ion unique, dit SI DEE comprenant au moins une entité monomérique éthyléniquement polymérisable et porteuse d'au moins un groupement anionique SI⁻, notamment choisi parmi les sulfonimides et sulfonimidures, les sulfonates, les acétates, les borates et leurs dérivés, avec un contre-ion alcalin notamment choisi parmi le Li, le Na ou le K et au moins une espèce donneuse de liaison hydrogène HBD comprenant au moins une fonction amide, thioamide, carbamide, polyéther, glyme, sulfone, sulfonamide, hydroxyle, acide carboxylique, nitrile, cétoester et/ou un groupement hétérocyclique, dans un rapport molaire SI⁻:HBD variant de 1:0,5 à 1:15, en particulier de 1:1 à 1:15, plus préférentiellement de 1:4 à 1:8, mieux un rapport molaire de 1:6.

L'invention vise également à protéger un système électrochimique comportant au moins un électrolyte polymère eutectique à conductivité ionique unipolaire SI PDEE conforme à l'invention et/ou obtenu selon le procédé de l'invention, ledit système électrochimique étant plus particulièrement une batterie rechargeable, en particulier une batterie lithium-métal, lithium-ion, sodium-métal, sodium-ion, potassium-métal ou potassium-ion.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] présente un graphe de la conductivité ionique (en S.cm⁻¹) en fonction de la température (en °C) et de l'inverse de la température (en 1/K) des électrolytes eutectogels single-ion p(MTFSI-Li/NMAC₁₀) et p(MTFSI-Li/NMAC₆) selon l'invention.
[Fig 2] présente un graphe de la conductivité ionique (en S.cm⁻¹) en fonction de la température (en °C) et de l'inverse de la température (en 1/K) des électrolytes eutectogels single-ion p(STFSI-Li/NMAC₆) et p(MTFSI-Li/DMEU₆).
[Fig 3] présente un graphe de la conductivité ionique (en S.cm⁻¹) en fonction de la température (en °C) et de l'inverse de la température (en 1/K) des électrolytes eutectogels p(MTFSI-Li/SO₆) et p(MTFSI-Li/DMMSA₆).
[Fig 4] présente un graphe de la conductivité ionique (en S.cm⁻¹) en fonction de la température (en °C) et de l'inverse de la température (en 1/K) des électrolytes eutectogels p(MTFSI-Li/DMPU₆) et p(MTFSI-Li/TMU₆).

### Description détaillée

### ÉLECTROLYTE POLYMÉRIQUE EUTECTIQUE À CONDUCTIVITE IONIQUE UNIPOLAIRE

Comme évoqué précédemment, les électrolytes selon l'invention, dits eutectogels single-ion, comprennent :
- au moins un polymère dont la chaîne principale est formée à partir de monomères, M, en C₂ à C₂₀ éthyléniquement polymérisables avec au moins une, et de préférence plusieurs, unités monomériques de ladite chaîne principale étant porteuse(s) d'au moins un groupement anionique dit SI⁻,
- au moins une espèce donneuse de liaison hydrogène, dite HBD, dans un rapport molaire SI⁻:HBD variant de 1:0,5 à 1:15, en particulier de 1:1 à 1:15 ; et
- au moins un cation, X⁺, de métal alcalin.

Dans le cadre de l'invention, on entend par :
- « solvant eutectique » ou « DES », un solvant composé de deux ou plusieurs constituants, capable d'auto-association, en particulier via la formation de liaisons hydrogène fortes, pour former un mélange eutectique présentant un point de fusion inférieur à celui de chaque constituant pris individuellement. D'une manière générale, les DES sont composés d'un mélange de deux ou plusieurs constituants, généralement d'au moins une espèce donneuse de liaisons hydrogène ou HBD avec au moins une espèce accepteuse de liaisons hydrogène ou HBA, dans les proportions correspondant au point eutectique dudit mélange,
- « électrolyte polymérique eutectique profond » ou « électrolyte eutectogel », un électrolyte formé d'une matrice polymère contenant un DES (ou DEE) composé d'au moins un sel de métal alcalin et d'au moins un HBD,
- « électrolyte à conductivité ionique unipolaire », ou « à ion unique » (single-ion), un électrolyte dans lequel seul le cation Li⁺, Na⁺ et/ou K⁺ est mobile tandis que le contre-anion, est greffé sur une matrice polymère ou sur une chaîne polymère, et donc ne participe pas à la conductivité ionique,
- « monomère éthyléniquement polymérisable », un monomère comprenant au moins une insaturation C=C réactive à la polymérisation,
- « espèce donneuse de liaisons hydrogène » ou « HBD », une espèce capable de dissocier la liaison ionique entre le contre-anion et le cation de métal alcalin,
- « métal alcalin », un élément chimique de la première colonne du tableau périodique des éléments, et plus particulièrement le lithium, le sodium, le potassium, le rubidium, le césium.

L'espèce donneuse de liaison hydrogène HBD considérée selon l'invention est un composé connu pour former un DES ou DEE avec un sel de métal alcalin. À ce titre, il est encore désigné selon l'invention comme un précurseur du solvant eutectique profond SI DES et de l'électrolyte polymère SI PDEE.

Le polymère composant un électrolyte eutectogel single-ion selon l'invention comprend une chaîne principale formée à partir de monomères, M, en C₂ à C₂₀ éthyléniquement polymérisables avec au moins une, et de préférence plusieurs, unités monomériques de ladite chaîne principale étant porteuse(s) d'au moins un groupement anionique dit SI⁻.

En particulier, ce ou ces monomère(s) M éthyléniquement polymérisable(s), dont dérive ce polymère comprennent au moins une fonction polymérisable de type (méth)acrylate, (méth)acrylamide, en particulier N-alkylacrylamide, vinylaryle, ou allylaryle ; de préférence (méth)acrylate, en particulier (méth)acrylate de propylène, ou vinylbenzyle, en particulier vinylbenzylène.

Selon un mode de réalisation particulièrement préféré, l'électrolyte comprend au moins un polymère comprenant plusieurs motifs, identiques ou différents de formule générale (I) suivante : 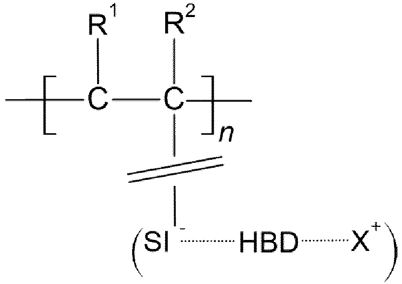 dans laquelle :
- R¹ et R² représentent indépendamment l'un de l'autre un hydrogène ou un groupement hydrocarboné en C₁ à C₄ ;
- n est un entier supérieur ou égal à 2, en particulier allant de 10 à 5 000 ; 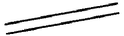 figure une simple liaison entre SI⁻ et la chaîne hydrocarbonée ou un espaceur organique E tel que défini ci-après ;
- SI⁻ désigne un groupement anionique à ion unique, et dérive d'anions choisis parmi les sulfonimides et sulfonimidures, les sulfonates, les acétates, les borates et leurs dérivés ;
- HBD désigne une espèce donneuse de liaison hydrogène, en particulier comprenant au moins une fonction amide, thioamide, carbamide, polyéther ou glyme en particulier diglyme, triglyme, tétraglyme, pentaglyme et hexaglyme, sulfone, sulfonamide, hydroxyle, acide carboxylique, nitrile, cétoester et/ou un groupement hétérocyclique ;
- X est un métal alcalin Li, Na ou K, de préférence est le Li.

Les substituants R¹ et R², s'ils représentent un groupement hydrocarboné, représentent de préférence un groupement méthyle.

De préférence, n dans la formule (I) précitée peut être compris entre 10 et 3 000, en particulier entre 10 et 1 000.

L'espaceur organique E peut comprendre de 2 à 8 atomes de carbone, être saturé ou insaturé, linéaire, cyclique ou aromatique, le cas échéant interrompu par un ou plusieurs hétéroatome(s), en particulier S, O, N, ou par C(O), et par exemple être un phénylène ou un alkylester.

Selon une variante de réalisation, le composé selon l'invention est dénué d'espaceur E.

Selon une autre variante de réalisation, le composé selon l'invention comprend un espaceur E notamment choisi parmi les phénylènes et les alkylesters qui comprennent de 1 à 4 atomes de carbone.

Le motif SI⁻ :X⁺ de la formule générale (I) peut notamment figurer un sulfonimide de lithium/sodium/potassium, un sulfonimidure de lithium/sodium/potassium, un sulfonate de lithium/sodium/potassium, un acétate de lithium/sodium/potassium, en particulier un trifluoroacétate de lithium/sodium/potassium, ou un borate de lithium/sodium/potassium.

Selon une variante de réalisation, l'ensemble des motifs SI⁻...HBD...X⁺ constituant le polymère de l'électrolyte de l'invention sont identiques.

Selon une autre variante de réalisation, le polymère de l'électrolyte selon l'invention possède au moins des motifs SI⁻ différents et des cations métalliques X⁺ différents.

De préférence, le (les) groupement(s) anionique(s) SI⁻ dérive(nt) d'anion(s) choisi(s) parmi le bis(trifluorométhanesulfonyl)imidure TFST⁻, le bis(pentafluoroéthane sulfone)imidure BETI⁻, le bis(fluorosulfonyl)imidure FSI⁻, trifluorométhane sulfonate TfO⁻, trifluoroacétate TFA⁻, de préférence le groupement anionique SI⁻ dérive du TFSI⁻, plus préférentiellement est l'anion sulfonylène de (trifluoromethylsulfonyl)azanide.

L'espèce donneuse de liaison hydrogène HBD comprend au moins une fonction amide, en particulier N-alkylamide, thioamide, carbamide, polyéther ou glyme en particulier diglyme, triglyme, tétraglyme, pentaglyme et hexaglyme, sulfone, sulfonamide, hydroxyle, acide carboxylique en particulier alpha-acide carboxylique, nitrile en particulier dinitrile, cétoester et/ou un groupement hétérocyclique tel que la pyridine et ses dérivés, en particulier les alkylpyridines et les lactones, en particulier les alpha-lactones, bêta-lactones, gamma-lactones, delta-lactones et oméga-lactones.

À titre d'exemples, l'espèce HBD peut être choisie parmi l'acétamide AA, le N-méthylacétamide NMAC, le diméthylacétamide DMAC, le propanamide PA, le butanamide BA, l'urée U, le méthylurée MU, l'éthylurée EU, le diméthylurée DMU, le tétraméthylurée TMU, le 2,2,2-trifluoroacétamide TFAA, l'imidazolidinone I, la 1,3-diméthyl-2-imidazolidinone DMI, la 1,3-diméthyl-3,4,5,6-tétrahydro-2(1H)-pyrimidinone DMPU, le thiourée SU, le diméthoxyéthane, le diglyme (2,5,8-trioxanonane), le triglyme (2,5,8,11-tétraoxadodécane), le tétraglyme (2,5,8,11,14-pentaoxapentadécane), le pentaglyme (2,5,8,11,14,17-hexaoxaoctadécane), l'hexaglyme (2,5,8,11,14,17,20-heptaoxahénicosane), la méthanesulfonamide MSA, la N,N-diméthylméthanesulfonamide DMMSA, la diméthylsulfone MSM, le glycérol G, l'éthylène glycol EG, l'acide lactique LA, l'acide oxalique OA, le succinonitrile SN, le pyruvate de méthyle MP, le méthyl acétoacétate MA, le lévulinate de méthyle ML, la 2-éthylpyridine EP, la gamma-butyrolactone GBL.

L'espèce HBD est de préférence choisie parmi le N-méthylacétamide NMAC, le succinonitrile SN, le diméthylacétamide DMAC, le sulfolane SO, le N,N-diméthylméthanesulfonamide DMMSA, le tétraméthylurée TMU, le 1,3-diméthyl-2-imidazolidinone DMEU, 1,3-diméthyl-3,4,5,6-tétrahydro-2(1H)-pyrimidinone DMPU, et leurs mélanges.

En particulier, l'électrolyte contient au moins un groupement anionique SI⁻ et au moins une espèce donneuse de liaison hydrogène HBD dans un rapport molaire SI⁻:HBD variant de 1:1 à 1:15, plus préférentiellement de 1:4 à 1:8, mieux un rapport molaire de 1:6.

Selon un mode de réalisation particulier,
- ledit monomère M éthyléniquement polymérisable précurseur dudit polymère comprend au moins une fonction polymérisable de type (méth)acrylate, et :
   - le groupement anionique SI⁻ dérive du TFSI⁻ et l'espèce donneuse de liaison hydrogène HBD est le NMAC, DMAC, SN, SO, DMMSA, TMU, DMEU ou DMPU dans un rapport molaire SI⁻:HBD de 1:6, ou
   - le groupement anionique SI⁻ dérive du TFSI⁻ et l'espèce donneuse de liaison hydrogène HBD est le NMAC dans un rapport molaire SI⁻:NMAC de 1:10, ou
- le monomère M éthyléniquement polymérisable comprend au moins une fonction polymérisable de type vinylbenzyle et le groupement anionique SI⁻ dérive du TFSI⁻ et l'espèce donneuse de liaison hydrogène HBD est le NMAC dans un rapport molaire SI⁻:NMAC de 1:6.

Avantageusement, l'électrolyte comprend au moins un polymère constitué de motifs, identiques ou différents, de formule générale (I) décrite précédemment.

### PROCÉDÉS DE PRÉPARATION

Comme énoncé ci-dessus, un autre aspect de la présente invention concerne un procédé utile pour préparer des électrolytes eutectogels single-ion conformes à l'invention.

Ce procédé comprend au moins l'étape consistant à polymériser un électrolyte eutectique dit SI DEE, ledit SI DEE comprenant :
- au moins un monomère M éthyléniquement polymérisable et porteur d'au moins un groupement anionique SI⁻ avec un contre-ion alcalin, et
- au moins une espèce donneuse de liaison hydrogène HBD, dans un rapport molaire SI⁻:HBD variant de 1:0,5 à 1:15, en particulier de 1:1 à 1:15.

Les monomères M ou entités monomériques éthyléniquement polymérisables peuvent être choisies parmi les entités comprenant au moins une fonction polymérisable de type (méth)acrylate, (méth)acrylamide, en particulier N-alkylacrylamide, vinylaryle, ou allylaryle ; de préférence (méth)acrylate ou vinylbenzyle ; plus préférentiellement (méth)acrylate de propylène ou vinylbenzylène.

Le terme « contre-ion alcalin » désigne un cation alcalin, de préférence c'est le cation Li⁺, Na⁺ ou K⁺, plus préférentiellement le contre-ion alcalin est le Li⁺.

Le groupement anionique SI⁻ et l'espèce HBD sont tels que décrits précédemment.

Selon une variante de réalisation, le SI DEE comprend au moins le 3-(2-méthylprop-2-énoyloxy)propylsulfonyl-(trifluorométhylsulfonyl)azanide de lithium (MTFSI-Li) et au moins une espèce donneuse de liaison hydrogène HBD choisi parmi le NMAC, DMAC, SN, SO, DMMSA, TMU, DMEU ou DMPU dans un rapport molaire MTFSI:HBD de 1:6 ou de 1:10.

Selon une autre variante de réalisation le SI DEE comprend au moins le lithium 4-vinyl-n-(trifluorométhane)sulfonylbenzène-1-sulfonamide (STFSI-Li) et au moins du NMAC à titre d'espèce donneuse de liaison hydrogène HBD dans un rapport molaire STFSI:NMAC de 1:6.

En particulier, l'électrolyte eutectique à ion unique dit SI DEE peut être caractérisé en ce que :
- le groupement anionique SI⁻ dérive du TFSI⁻ et l'espèce donneuse de liaison hydrogène HBD est le NMAC, DMAC, SN, SO, DMMSA, TMU, DMEU ou DMPU dans un rapport molaire SI⁻:HBD de 1:6, ou
- le groupement anionique SI⁻ dérive du TFSI⁻ et l'espèce donneuse de liaison hydrogène HBD est le NMAC dans un rapport molaire SI⁻:NMAC de 1:10.

En ce qui concerne la polymérisation, elle est radicalaire.

Les conditions expérimentales à retenir pour la polymérisation sont variables selon la nature chimique du monomère, des groupements anioniques SI⁻ et de la ou des espèces donneuses de liaison hydrogène HBD retenues.

Ces conditions relèvent généralement des compétences de l'homme du métier.

Cette polymérisation peut être activée par traitement thermique, sous rayonnement UV, en présence ou non d'un amorceur radicalaire.

L'homme du métier pourra recourir à tout amorceur de polymérisation radicalaire conventionnellement utilisé en polymérisation radicalaire contrôlée par transfert de chaîne réversible par addition-fragmentation (en anglais *Reversible Addition-Fragmentation Chain Transfer* (RAFT)), en polymérisation radicalaire contrôlée par transfert d'atome (en anglais *Atom Transfer Radical Polymerization* (ATRP)) et en polymérisation radicalaire en présence de nitroxydes (en anglais *Nitroxide Mediated Polymerization* (NMP)).

À titre d'exemple d'amorceurs radicalaires peuvent être cités les (di)azoïques tels que l'azobisisobutyronitrile, le 4,4'-Azobis (4-cyanopentanoic acid) (ou ACP), le 1,10-azobis(cyclohexanecarbonitrile) (ou VAZO-88), le 2,2'-azobis(N-butyl-2-methylpropionamide) (ou VAm-110) et le 2,2'-azobis[2-methyl-N-(2-hydroxyethyl)propionamide] (ou VA-086), les peroxydes, les persulfates tel que K₂S₂O₈, les boranes tel que le triéthylborane, et leurs mélanges. Plus particulièrement, ils peuvent être choisis parmi l'azobisisobutyronitrile, le peroxyde de benzoyle, le peroxyde de lauroyle et leurs mélanges.

La polymérisation peut se dérouler à une température allant de 40 à 100°C, de préférence de 60 à 80°C, plus préférentiellement de 65 à 85°C, mieux à une température de 70°C.

Elle peut durer de quelques minutes à 10 heures, de préférence de 30 minutes à 5 heures, plus préférentiellement de 45 minutes à 3 heures, mieux de 1 heure à 2 heures.

De préférence, la polymérisation est réalisée sans milieu solvant.

Selon une variante de réalisation, le procédé peut comprendre, au préalable de la polymérisation, la formation du SI DEE selon un procédé comprenant au moins les étapes consistant à :
- disposer d'au moins une entité monomérique éthyléniquement polymérisable et porteuse d'au moins un groupement anionique SI⁻ avec un contre-ion alcalin X⁺, dite MSI⁻X⁺ et
- mettre en présence ladite entité monomérique MSI⁻X⁺ avec au moins une espèce donneuse de liaison hydrogène, HBD, précurseur d'un électrolyte eutectique DES ou DEE, les quantités en entités monomériques MSI⁻X⁺ et espèces donneuses de liaison hydrogène étant ajustées pour former un SI DEE avec un rapport molaire SI⁻:HBD variant de 1:0,5 à 1:15, en particulier de 1:1 à 1:15, plus préférentiellement de 1:4 à 1:8, mieux un rapport molaire de 1:6.

En particulier, l'entité monomérique comprend au moins une fonction polymérisable de type (méth)acrylate, en particulier (méth)acrylate de propylène, ou vinylbenzyle, en particulier vinylbenzylène.

En particulier, l'entité monomérique est fonctionnalisée par au moins un anion SI⁻ dérivant d'anions choisis parmi les sulfonimides et sulfonimidures, les sulfonates, les acétates, les borates et leurs dérivés, et de préférence parmi le bis(trifluorométhanesulfonyl)imidure TFSI⁻, le bis(pentafluoroéthane sulfone)imidure BETI⁻, le bis(fluorosulfonyl)imidure FSI⁻, trifluorométhane sulfonate TfO⁻, trifluoroacétate TFA⁻.

En particulier, l'espèce donneuse de liaison hydrogène HBD est choisie parmi les espèces comprenant au moins une fonction amide, thioamide, carbamide, polyéther ou glyme en particulier diglyme, triglyme, tétraglyme, pentaglyme et hexaglyme, sulfone, sulfonamide, hydroxyle, acide carboxylique, nitrile, cétoester et/ou un groupement hétérocyclique, et de préférence parmi le N-méthylacétamide NMAC, le succinonitrile SN, le diméthylacétamide DMAC, le sulfolane SO, le N,N-diméthylméthanesulfonamide DMMSA, le tétraméthylurée TMU, le 1,3-diméthyl-2-imidazolidinone DMEU, 1,3-diméthyl-3,4,5,6-tétrahydro-2(1H)-pyrimidinone DMPU, et leurs mélanges.

L'interaction entre le monomère et l'espèce donneuse de liaison hydrogène est généralement réalisée sans milieu solvant, et généralement à température ambiante, sous agitation. Elle peut durer de quelques minutes à 10 heures, de préférence de 15 minutes à 5 heures, plus préférentiellement de 30 minutes à 3 heures, mieux de 45 minutes à 2 heures, encore mieux 1 heure.

Bien entendu, il appartient à l'homme du métier d'ajuster les conditions de préparation de l'électrolyte eutectogel single-ion et du SI DEE pour obtenir les composés désirés.

Il est à noter que l'électrolyte eutectogel single-ion selon l'invention et/ou obtenu avec le procédé de l'invention ainsi que l'électrolyte SI DEE sont particulièrement sûrs d'utilisation en tant qu'électrolytes. En effet, l'électrolyte SI DEE présente une meilleure sûreté et/ou sécurité en comparaison avec les électrolytes liquides connus dans l'art antérieur, puisqu'il est moins sujet aux risques d'auto-inflammation. De plus, une fois le SI DEE polymérisé pour donner l'électrolyte eutectogel single-ion selon l'invention, la sûreté et/ou sécurité sont accrues du fait de la nature solide de l'électrolyte polymérique.

Par ailleurs, l'électrolyte eutectogel single-ion selon l'invention et/ou obtenu avec le procédé de l'invention ainsi que l'électrolyte SI DEE sont et restent homogènes, en plus d'être faciles à synthétiser. En effet, aucune phase hétérogène n'est obtenue lors de leur synthèse. De plus, ceux-ci sont obtenus rapidement.

### APPLICATIONS

Le SI DEE et tout particulièrement l'électrolyte eutectogel single-ion selon l'invention peuvent avantageusement être utilisés comme électrolytes, en particulier dans un système électrochimique, notamment dans une batterie au lithium, au sodium ou au potassium.

Comme il ressort des exemples ci-après, les électrolytes polymériques eutectiques conformes à l'invention possèdent avantageusement une conductivité ionique unipolaire à 30 °C supérieure ou égale à 6,410⁻⁵ S/cm, et à ce titre, améliorée comparativement à des eutectogels de l'art antérieur.

Avantageusement, un électrolyte polymérique eutectique selon l'invention présente en outre un nombre de transport à 30 °C égal à 1.

Selon un mode de réalisation avantageux, un électrolyte polymérique eutectique conforme à l'invention possède ainsi une conductivité ionique unipolaire à 30 °C supérieure ou égale à 6,410⁻⁵ S/cm et un nombre de transport à 30 °C égal à 1.

L'électrolyte polymérique eutectique à conductivité ionique unipolaire selon l'invention peut être mis en œuvre dans un système électrochimique.

La présente invention concerne ainsi, selon encore un autre de ses aspects, un système électrochimique comprenant un électrolyte polymère eutectique à conductivité ionique unipolaire tel que décrit précédemment et/ou obtenu selon le procédé de préparation tel que décrit précédemment.

Le système électrochimique peut être un système générateur, convertisseur ou de stockage électrochimique.

Il peut s'agir plus particulièrement d'une batterie primaire ou secondaire, par exemple une batterie au lithium, sodium ou potassium.

Selon un mode de réalisation particulier, l'électrolyte polymérique eutectique est mis en œuvre dans une batterie, en particulier une batterie au lithium.

L'électrolyte SI DEE tel que décrit précédemment peut également être mise en œuvre dans un système électrochimique.

Selon un autre de ses aspects, l'invention concerne ainsi un système électrochimique comprenant un électrolyte eutectique à ion unique dit SI DEE tel que décrit précédemment et/ou obtenu selon le procédé de préparation tel que décrit précédemment.

L'invention va maintenant être décrite au moyen des exemples suivants, donnés bien entendu à titre illustratif et non limitatif de l'invention.

### Exemples

### Exemple 1

### Préparation d'un électrolyte polymère p(MTFSI-Li/NMAC₆) eutectique profond à conductivité ionique unipolaire

a) 0,45 g de MTFSI-Li (1 éq.) à titre de monomère single ion (MSI) et 0,57 g de NMAC (6 éq.) à titre d'espèce donneuse de liaison hydrogène (HBD), sont introduits dans un vial équipé d'un agitateur magnétique. Le mélange est agité pendant 1 heure à température ambiante pour former le monomère électrolyte eutectique profond à ion unique MTFSI-Li/NMAC (1:6) sous la forme d'un liquide translucide et homogène de couleur orange.
b) 2,25 mg (0,5% en poids par rapport au poids de MTFSI-Li) d'AIBN sont ajoutés au monomère MTFSI-Li/NMAC (1:6) formé en a). Le mélange réactionnel est placé sous agitation pendant 30 minutes jusqu'à solubilisation de l'AIBN. Le vial est ensuite chauffé à l'étuve à 70°C pendant 2 heures. Le polymère électrolyte eutectique profond à conductivité ionique unipolaire est obtenu sous la forme d'un polymère ductile, homogène, translucide, de couleur orange.

### Exemple 2

### Préparation d'un électrolyte polymère p(MTFSI-Li/NMAC₁₀) eutectique profond à conductivité ionique unipolaire

a) 0,35 g de MTFSI-Li (1 éq.) à titre de monomère single ion (MSI), et 0,74 g de NMAC (10 éq.) à titre d'espèce donneuse de liaison hydrogène (HBD), sont introduits dans un vial équipé d'un agitateur magnétique. Le mélange est agité pendant 1 heure à température ambiante puis le monomère électrolyte eutectique profond à ion unique est obtenu sous la forme d'un liquide translucide et homogène de couleur orange.
b) 1,75 mg (0,5% en poids par rapport au poids de MTFSI-Li) d'AIBN sont ajoutés au monomère MTFSI-Li/NMAC (1:10) formé en a). Le mélange réactionnel est placé sous agitation pendant 30 minutes jusqu'à solubilisation de l'AIBN. Le vial est ensuite chauffé à l'étuve à 70°C pendant 2 heures. Le polymère électrolyte eutectique profond à conductivité ionique unipolaire est obtenu sous la forme d'un polymère ductile, homogène, translucide, de couleur orange.

Ce polymère est plus ductile que le polymère obtenu à l'exemple 1.

### Exemple 3

### Caractérisation des propriétés électrochimiques des électrolytes

La conductivité ionique des électrolytes polymères p(MTFSI-Li/NMAC₆) et p(MTFSI-Li/NMAC₁₀) préparés aux exemples 1 et 2 est déterminée par spectroscopie d'impédance électrochimique (EIS pour « Electrochemical Impedance Spectroscopy » en terminologie anglo-saxonne), en mettant en œuvre un analyseur d'impédance VMP3 (BioLogic) pour une plage de températures allant de 10 °C à 80 °C par paliers de 10°C.

Pour ce faire, chacun d'entre eux est introduit dans une pile bouton symétrique entre deux électrodes de blocage en acier inoxydable.

Les valeurs de conductivité ionique (σ) des deux électrolytes polymères à conductivité ionique unipolaire (nombre de transport égal à 1) sont présentées dans le tableau 1 suivant.

**[Tableau 1]**

| **Polymère électrolyte** | **σ^{a} (S.cm⁻¹)** |
|---|---|
| **p(MTFSI-Li/NMAC₆)** | 1,1·10⁻⁴ |
| **p(MTFSI-Li/NMAC₁₀)** | 7,1·10⁻⁴ |

| | |
|---|---|
| ^{a}mesuré à 30 °C. | |

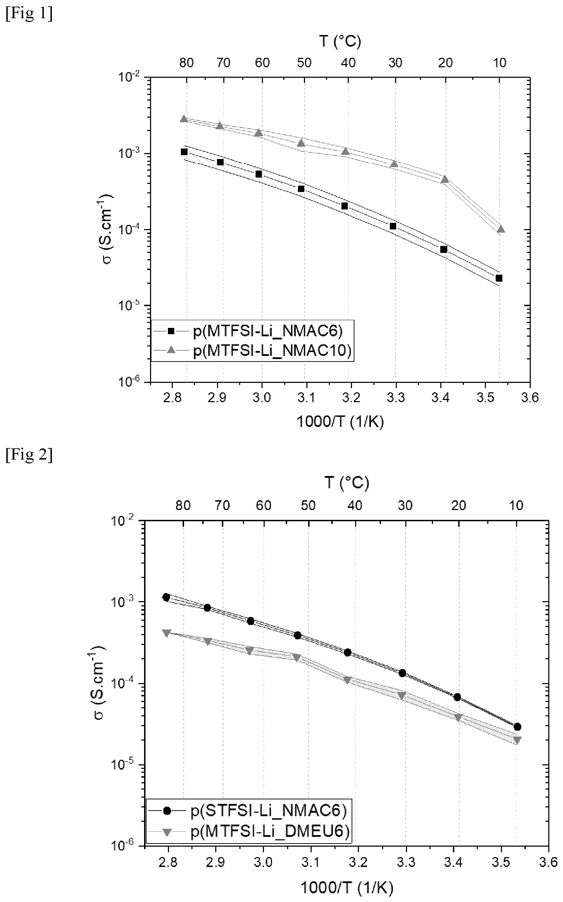

La figure 1 représente l'évolution de la conductivité ionique des électrolytes p(MTFSI-Li/NMAC₆) et p(MTFSI-Li/NMAC₁₀) en fonction de la température.

Il est ainsi constaté que les électrolytes p(MTFSI-Li/NMAC₆) et p(MTFSI-Li/NMAC₁₀) selon l'invention possèdent des valeurs de conductivité ionique unipolaire à 30°C intéressantes et celles-ci sur une plage de température allant de 10 °C à 80 °C.

De plus, ils permettent tous deux d'obtenir un nombre de transport égal à 1.

### Exemple 4

### Préparation d'électrolytes eutectiques profonds DEE à conductivité ionique unipolaire conformes à l'invention à partir de différents donneurs de liaisons hydrogène et leur caractérisation électrochimique

Une masse définie de monomère à ion unique MSI (MTFSI-Li ou STFSI-Li) et une masse définie d'espèce donneuse de liaison hydrogène HBD sont introduits dans un vial équipé d'un agitateur magnétique, selon un rapport molaire de 1:6 MSI:HBD. Le mélange est agité pendant 1 heure à température ambiante puis le monomère électrolyte eutectique profond à ion unique, noté SI DEE, est obtenu.

Les pourcentages massiques et masses des MSI et des HBD utilisés sont précisées respectivement dans les tableaux 2 et 3 ci-dessous.

**[Tableau 2]**

| | **Monomères à ion unique MSI** | | **Donneurs de liaison hydrogène, HBD** | | | | | | |
|---|---|---|---|---|---|---|---|---|---|
| **%_{massique}** | MTFSI-Li | STFSI-Li | DMAC | SO | DMMSA | TMU | DMEU | DMPU | NMAC |
| **SI DEE 1** | 0,4 | - | 0,60 | - | - | - | - | - | - |
| **SI DEE 2** | 0,33 | - | - | 0,68 | - | - | - | - | - |
| **SI DEE 3** | 0,32 | - | - | - | 0,68 | - | - | - | - |
| **SI DEE 4** | 0,33 | - | - | - | - | 0,67 | - | - | - |
| **SI DEE 5** | 0,33 | - | - | - | - | - | 0,67 | - | - |
| **SI DEE 6** | 0,31 | - | - | - | - | - | - | 0,69 | - |
| **SI DEE 7** | 0,44 | - | - | - | - | - | - | - | 0,56 |
| **SI DEE 8** | - | 0,44 | - | - | - | - | - | - | 0,56 |

**[Tableau 3]**

| | **Monomères à ion unique MSI** | | **Donneurs de liaison hydrogène, HBD** | | | | | | |
|---|---|---|---|---|---|---|---|---|---|
| **Masses (g)** | MTFSI-Li | STFSI-Li | DMAC | SO | DMMSA | TMU | DMEU | DMPU | NMAC |
| **SI DEE 1** | 0,40 | - | 0,61 | - | - | - | - | - | - |
| **SI DEE 2** | 0,33 | - | - | 0,69 | - | - | - | - | - |
| **SI DEE 3** | 0,35 | - | - | - | 0,75 | - | - | - | - |
| **SI DEE 4** | 0,33 | - | - | - | - | 0,67 | - | - | - |
| **SI DEE 5** | 0,35 | - | - | - | - | - | 0,69 | - | - |
| **SI DEE 6** | 0,31 | - | - | - | - | - | - | 0,69 | - |
| **SI DEE 7** | 0,45 | - | - | - | - | - | - | - | 0,57 |
| **SI DEE 8** | - | 0,45 | - | - | - | - | - | - | 0,61 |

Après ajout d'amorceur radicalaire (AIBN) et traitement thermique, les polymères électrolyte eutectique à conductivité ionique unipolaire correspondant à chaque SI DEE sont obtenus.

Leur conductivité ionique est déterminée par spectroscopie d'impédance électrochimique comme décrit dans l'exemple 3.

Les valeurs de conductivité ionique (σ) des différents électrolytes polymères à conductivité ionique unipolaire (nombre de transport égal à 1) synthétisés sont rassemblées dans le tableau 4 suivant.

Ce tableau rend également compte à titre de témoins des valeurs de conductivité ionique (σ) d'électrolytes non conformes à l'invention, à savoir les électrolytes obtenus dans les arts antérieurs Porcarelli et *al.* [1], et Kelchtermans et *al.* [2]*.*

**[Tableau 4]**

| | **Électrolyte polymère** | **σ**^{a} **(S.cm⁻¹)** |
|---|---|---|
| **1** | p(MTFSI-Li/DMAC₆) | 1,1·10⁻⁴ |
| **2** | p(MTFSI-Li/SO₆) | 1,2·10⁻⁴ |
| **3** | p(MTFSI-Li/DMMSA₆) | 1,1·10⁻⁴ |
| **4** | p(MTFSI-Li/TMU₆) | 9,6·10⁻⁵ |
| **5** | p(MTFSI-Li/DMEU₆) | 7,2·10⁻⁵ |
| **6** | p(MTFSI-Li/DMPU₆) | 6,4·10⁻⁵ |
| **7** | p(MTFSI-Li/NMAC₆) | 1,1·10⁻⁴ |
| **8** | p(STFSI-Li/NMAC₆) | 1,3·10⁻⁴ |
| **Porcarelli et *al.* [1]** | SIPE3 (p(MTFSI-LI/PEGM/PEGDM) + 50%ₘ PC) | 7.10⁻⁵ |
| **Kelchtermans et *al.* [2]** | P-ETG-70 (p(NIPAM-EGDMA) + 70% N-MAC/LiTFSI) | 1.10⁻⁴ |

| | | |
|---|---|---|
| ^{a}mesuré à 30 °C. PEGM : méthacrylate d'éther méthylique de poly(éthylène glycol), PEGDM : diméthacrylate d'éther méthylique de poly(éthylène glycol) bifonctionnel, PC : carbonate de propylène, P-ETG-70 : eutectogel à squelette polymère contenant 70%vol de DES, NIPAM : N-Isopropylacrylamide, EGDMA : ethylene glycol dimethacrylate. | | |

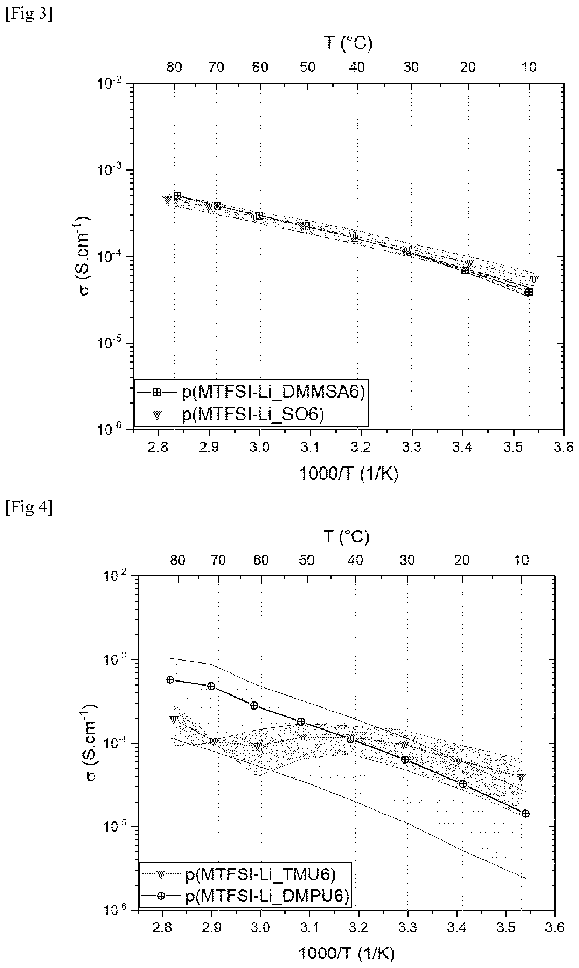

Les figures 2, 3 et 4 représentent l'évolution de la conductivité ionique des électrolytes polymères 2 à 8 en fonction de la température.

Il est ainsi constaté que l'ensemble des électrolytes polymères eutectiques à conductivité ionique unipolaire selon l'invention présentent des avantages par rapport aux électrolytes de l'état de l'art. Les eutectogels single-ion de l'invention possèdent des valeurs de conductivité ionique à 30°C du même ordre ou supérieures à celle de l'électrolyte de Porcarelli et *al,* tout en présentant l'avantage considérable de ne pas mettre en œuvre un solvant carbonate, qui apporterait des problématiques liés au manque de sécurité de l'électrolyte.

Bien que les eutectogels single-ion selon l'invention possèdent des valeurs de conductivité ionique à 30°C du même ordre que celle de l'électrolyte de Kelchtermans et *al,* ils permettent d'obtenir un nombre de transport (t_{Li+}) égal à 1 du fait de la conductivité unipolaire. La conductivité du Li+ (σ_{Li+}, sachant que σ_{Li+} = σ * t_{Li+}) des eutectogels single-ion de l'invention est donc largement supérieure à celle de Kelchtermans et *al.*

### Liste des documents cités

[1] Porcarelli L, Shaplov AS, Bella F, Nair JR, Mecerreyes D, Gerbaldi C. Single-Ion Conducting Polymer Electrolytes for Lithium Metal Polymer Batteries that Operate at Ambient Temperature. ACS Energy Lett 2016;1:678-82. https://doi.org/10.1021/acsenergylett.6b00216.
[2] Kelchtermans A-S, Joos B, De Sloovere D, Paulus A, Mercken J, Mylavarapu SK, et al. Polymeric Backbone Eutectogel Electrolytes for High-Energy Lithium-Ion Batteries. ACS Omega 2023; 8:36753-63. https://doi.org/10.1021/acsomega.3c03081.
[3] Kelchtermans A-S, Joos B, De Sloovere D, Mercken J, Derveaux E, Adriaensens P, et al. How Polymer Influences the Electrochemical Behavior of Eutectogels for Lithium Batteries. ACS Appl Polym Mater 2024;6:90-101. https://doi.org/10.1021/acsapm.3c01487.
[4] Zhang C, Niu Z, Bae J, Zhang L, Zhao Y, Yu G. Polyeutectic-based stable and effective electrolytes for high-performance energy storage systems. Energy Environ Sci 2021;14:931-9. https://doi.org/10.1039/D0EE03100C.

## Revendications

1. Électrolyte polymérique eutectique à conductivité ionique unipolaire, dit encore SI PDEE, comprenant :
- au moins un polymère dont la chaîne principale est formée à partir de monomères, M, en C₂ à C₂₀ éthyléniquement polymérisables avec au moins une, et de préférence plusieurs, unités monomériques de ladite chaîne principale étant porteuse(s) d'au moins un groupement anionique dit SI⁻ dérive(nt) d'anion(s) choisi(s) parmi le bis(trifluorométhanesulfonyl)imidure TFSI⁻, le bis(pentafluoroéthane sulfone)imidure BETI⁻, le bis(fluorosulfonyl)imidure FSI⁻, trifluorométhane sulfonate TfO⁻, trifluoroacétate TFA⁻,
- au moins une espèce donneuse de liaison hydrogène, dite HBD, choisie parmi le N-méthylacétamide NMAC, le succinonitrile SN, le diméthylacétamide DMAC, le sulfolane SO, le N,N-diméthylméthanesulfonamide DMMSA, le tétraméthylurée TMU, le 1,3-diméthyl-2-imidazolidinone DMEU, 1,3-diméthyl-3,4,5,6-tétrahydro-2(1H)-pyrimidinone DMPU, et leurs mélanges, dans un rapport molaire SI⁻:HBD variant de 1:0,5 à 1:15, en particulier de 1:1 à 1:15 ; et
- au moins un cation, X⁺, de métal alcalin.

2. Électrolyte selon la revendication précédente, **caractérisé en ce que** ladite espèce donneuse de liaison hydrogène HBD est un précurseur de solvant eutectique profond dit DES.

3. Électrolyte selon la revendication 1 ou 2, **caractérisé en ce que** ledit polymère comprend plusieurs motifs, identiques ou différents de formule générale (I) suivante : 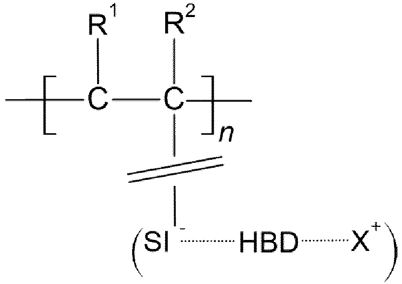 dans laquelle :
- R¹ et R² représentent indépendamment l'un de l'autre un hydrogène ou un groupement hydrocarboné en C₁ à C₄ ;
- n est un entier supérieur ou égal à 2, en particulier allant de 10 à 5 000 ; 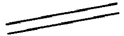 figure une simple liaison entre SI⁻ et la chaîne hydrocarbonée ou un espaceur organique E, en particulier E comprend de 2 à 8 atomes de carbone, est saturé ou insaturé, linéaire, cyclique ou aromatique, le cas échéant interrompu par un ou plusieurs hétéroatome(s), en particulier S, O, N, ou par C(O), et par exemple est un phénylène ou un alkylester ;
- SI⁻ désigne un groupement anionique à ion unique,
- HBD désigne une espèce donneuse de liaison hydrogène,
- X est un métal alcalin Li, Na ou K, de préférence est Li.

4. Électrolyte selon l'une quelconque des revendications précédentes, **caractérisé en ce que** le groupement anionique SI⁻ dérive du TFSI⁻, plus préférentiellement est l'anion sulfonylène de (trifluorométhylsulfonyl)azanide.

5. Électrolyte selon l'une quelconque des revendications précédentes, **caractérisé en ce que** ledit monomère M éthyléniquement polymérisable comprend au moins une fonction polymérisable de type (méth)acrylate, (méth)acrylamide, en particulier N-alkylacrylamide, vinylaryle, ou allylaryle ; de préférence (méth)acrylate ou vinylbenzyle ; plus préférentiellement (méth)acrylate de propylène ou vinylbenzylène.

6. Électrolyte selon l'une quelconque des revendications précédentes, **caractérisé en ce qu'**il contient au moins un groupement anionique SI⁻ et au moins une espèce donneuse de liaison hydrogène HBD dans un rapport molaire SI⁻:HBD variant de 1:1 à 1:15.

7. Électrolyte selon l'une quelconque des revendications précédentes, **caractérisé en ce que** ledit monomère M éthyléniquement polymérisable comprend au moins une fonction polymérisable de type (méth)acrylate, et :
- le groupement anionique SI⁻ dérive du TFSI⁻ et l'espèce donneuse de liaison hydrogène HBD est le NMAC, DMAC, SN, SO, DMMSA, TMU, DMEU ou DMPU dans un rapport molaire SI⁻:HBD de 1:6, ou
- le groupement anionique SI⁻ dérive du TFSI⁻ et l'espèce donneuse de liaison hydrogène HBD est le NMAC dans un rapport molaire SI⁻:NMAC de 1:10 ;
ou alors ledit monomère M éthyléniquement polymérisable comprend au moins une fonction polymérisable de type vinylbenzyle et le groupement anionique SI⁻ dérive du TFSI⁻ et l'espèce donneuse de liaison hydrogène HBD est le NMAC dans un rapport molaire SI⁻:NMAC de 1:6.

8. Procédé de préparation d'un électrolyte polymère eutectique à conductivité ionique unipolaire selon l'une quelconque des revendications précédentes, comprenant au moins l'étape consistant à polymériser un électrolyte eutectique, dit SI DEE, qui comprend au moins une entité monomérique éthyléniquement polymérisable, et porteuse d'au moins un groupement anionique SI⁻ avec un contre-ion alcalin et au moins une espèce donneuse de liaison hydrogène HBD, dans un rapport molaire SI⁻:HBD variant de 1:0,5 à 1:15.

9. Procédé selon la revendication précédente, ladite polymérisation étant activée par traitement thermique, sous rayonnement UV, en présence ou non d'un amorceur radicalaire.

10. Procédé selon l'une quelconque des revendications 8 à 9, ledit SI DEE étant au préalable obtenu par un procédé comprenant au moins les étapes consistant à :
- disposer d'au moins une entité monomérique éthyléniquement polymérisable et porteuse d'au moins un groupement anionique SI⁻ avec un contre-ion alcalin X⁺, dite MSI⁻X⁺ et
- mettre en présence ladite entité monomérique MSI⁻X⁺ avec au moins une espèce donneuse de liaison hydrogène, HBD, précurseur d'un électrolyte eutectique DES ou DEE, dans un rapport molaire SI⁻:HBD variant de 1:0,5 à 1:15, en particulier de 1:1 à 1:15, pour former un électrolyte eutectique dit SI DEE.

11. Électrolyte eutectique à ion unique dit SI DEE, comprenant au moins une entité monomérique éthyléniquement polymérisable et porteuse d'au moins un groupement anionique SI⁻ dérive(nt) d'anion(s) choisi(s) parmi le bis(trifluorométhanesulfonyl)imidure TFSI⁻, le bis(pentafluoroéthane sulfone)imidure BETI⁻, le bis(fluorosulfonyl)imidure FSI⁻, trifluorométhane sulfonate TfO⁻, trifluoroacétate TFA⁻,
avec un contre-ion alcalin notamment choisi parmi le Li, le Na ou le K et au moins une espèce donneuse de liaison hydrogène HBD comprenant au moins une fonction amide, thioamide, carbamide, polyéther, sulfone, sulfonamide, hydroxyle, acide carboxylique, nitrile, cétoester et/ou un groupement hétérocyclique,
dans un rapport molaire SI⁻:HBD variant de 1:0,5 à 1:15 , en particulier de 1:1 à 1:15.

12. Électrolyte eutectique à ion unique dit SI DEE selon la revendication 11, **caractérisé en ce que** :
- le groupement anionique SI⁻ dérive du TFSI⁻ et l'espèce donneuse de liaison hydrogène HBD est le NMAC, DMAC, SN, SO, DMMSA, TMU, DMEU ou DMPU dans un rapport molaire SI⁻:HBD de 1:6, ou
- le groupement anionique SI⁻ dérive du TFSI⁻ et l'espèce donneuse de liaison hydrogène HBD est le NMAC dans un rapport molaire SI⁻:NMAC de 1:10.

13. Système électrochimique comportant au moins un électrolyte polymère eutectique à conductivité ionique unipolaire SI PDEE selon l'une quelconque des revendications 1 à 7 et/ou obtenu selon le procédé selon l'une quelconque des revendications 8 à 10, ledit système électrochimique étant plus particulièrement une batterie rechargeable, en particulier une batterie lithium-métal, lithium-ion, sodium-métal, sodium-ion, potassium-métal ou potassium-ion, ou comprenant un électrolyte eutectique à ion unique dit SI DEE selon l'une quelconque des revendications 11 ou 12.
